(19) Europäisches Patentamt
European Patent Office
Office européen des brevets

(11) **EP 2 625 259 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **11763588.8**

(22) Anmeldetag: **20.09.2011**

(51) Int Cl.:
*C12C 7/06* *(2006.01)*  *C12C 7/22* *(2006.01)*
*C12C 7/04* *(2006.01)*  *G05D 23/19* *(2006.01)*
*F28F 27/00* *(2006.01)*  *F28D 1/06* *(2006.01)*

(86) Internationale Anmeldenummer:
**PCT/EP2011/004684**

(87) Internationale Veröffentlichungsnummer:
**WO 2012/045395 (12.04.2012 Gazette 2012/15)**

(54) **VERFAHREN UND VORRICHTUNG INSBESONDERE ZUM MAISCHEN BEI DER HERSTELLUNG VON BIER**

METHOD AND DEVICE IN PARTICULAR FOR MASHING IN THE PRODUCTION OF BEER

PROCÉDÉ ET DISPOSITIF EN PARTICULIER DE BRASSAGE LORS DE LA FABRICATION DE BIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2010 DE 102010041955**

(43) Veröffentlichungstag der Anmeldung:
**14.08.2013 Patentblatt 2013/33**

(73) Patentinhaber: **Krones AG**
**93068 Neutraubling (DE)**

(72) Erfinder: **KAMMERLOHER, Helmut**
**85354 Freising (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 1 253 194**   **WO-A1-93/03311**
**WO-A1-2011/076410**   **DE-A1- 2 535 120**
**DE-A1-102009 043 923**   **DE-C1- 3 407 795**
**DE-U1-202009 005 211**

**Beschreibung**

Die Erfindung betrifft ein Verfahren und eine Vorrichtung insbesondere zum Maischen bei der Herstellung von Bier.

Die DE 20 2009 005211 U1 beschreibt eine Brauvorrichtung, die zur energiesparenden Erhitzung von Maische und/oder Würze geeignet ist und Heizflächen, mehrere Temperatursensoren sowie eine Steuereinheit umfasst. Diese Druckschrift zeigt keinen Temperatursensor zum Messen der Rücklauftemperatur und auch nicht, dass die Heizrate über die logarithmische Temperaturdifferenz oder die Differenz zwischen der mittleren Heizmitteltemperatur und der jeweils aktuellen Temperatur der Maische/Würze geregelt wird.

Die DE 25 35 120 A1 beschreibt ebenfalls bereits ein Verfahren zur Behandlung von Bierwürze mit einer Würzepfanne und einem Außenkocher.

Entsprechende Vorrichtungen weisen Heizungen auf, insbesondere Zargenheizungen, die nach dem Wärmetauscherprinzip funktionieren. Als Heizmedium dient beispielsweise Dampf oder ein flüssiges Medium wie z.B. Wasser. Bei der Verwendung von Dampf als Heizmedium wird beispielsweise das Dampfventil je nach Heizrate entsprechend mehr oder weniger geöffnet. Das Dampfventil kann beispielsweise auch auf einen bestimmten Dampfdruck innerhalb der Heizfläche geregelt werden. Heißwasserbetriebene Maischgefäße werden z.B. mittels einer Rücklaufbeimischung auf eine bestimmte Vorlauf- Temperatur geregelt. Die Heizratenregelung ist jedoch bei einem mit Heißwasser beheizten Heizapparat oft viel zu träge. Das bedeutet, dass einige Minuten vergehen können, bis man im flüssigen Medium (Produkt) die Heizrate bestimmen kann. Bis also ein Regler eine gewünschte Heizrate sauber ausregelt, kann es insbesondere beim Maischen viel zu lange dauern und man hat bis zu einem stationären Betrieb oft schon die nächste Enzymrast erreicht.

Hiervon ausgehend liegt der vorliegenden Erfindung die Aufgabe zugrunde, eine Vorrichtung und ein Verfahren, insbesondere zum Maischen bereitzustellen, bei denen die Heizrate insbesondere bei niedrigen Heizmittelvor- und -rücklauftemperaturen gut regelbar ist. Erfindungsgemäß wird diese Aufgabe durch die Merkmale der Ansprüche 1 und 5 gelöst. Bevorzugte Ausführungsformen ergeben sich aus den Unteransprüchen.

Gemäß der vorliegenden Erfindung wird die Vorlauftemperatur (VL- Temperatur) und auch die Rücklauftemperatur (RL- Temperatur) des Heizmediums über einen entsprechenden Temperatursensor und die jeweils aktuelle Temperatur des flüssigen Mediums (Produkts) in dem Behälter über einen weiteren Temperatursensor gemessen. Die Heizratenregelung erfolgt so, dass die logarithmische Temperaturdifferenz zwischen dem Heizmedium und der jeweiligen aktuellen Temperatur des flüssigen Mediums konstant gehalten wird. Dadurch wird erreicht, dass die Heizrate unter Vernachlässigung einer sich leicht ändernden Wärmekapazität etc. dann vom exakten Wert weniger als 10% abweicht. Da die beteiligten Temperaturen aber schon von der ersten Sekunde an exakt gemessen werden, kann die geforderte Heizrate sehr schnell eingeregelt werden.

Über die logarithmische Temperaturdifferenz bedeutet hier auch über einen entsprechend proportionalen Wert.

Unter Verwendung eines zu ermittelnden anlagespezifischen Faktors (s. Formel 4), kann man dann sogar die gewünschte Heizrate direkt eingeben.

Die Regelung über die logarithmische Temperaturdifferenz ist besonders exakt. Es kann jedoch auch ausreichend sein, die mittlere Heizmitteltemperatur entsprechend dem Mittelwert zwischen Vorlauf- und Rücklauftemperatur des Heizmediums und die Temperatur des flüssigen Mediums zu ermitteln und die Differenz zwischen der mittleren Heizmitteltemperatur und der jeweils aktuellen Temperatur des flüssigen Mediums während des Erwärmens, in ähnlicher Weise wie oben beschrieben, zu regeln.

Ein weiterer großer Vorteil ist bei der vorliegenden Erfindung, dass sich infolge der niedrigen VL-Temperaturen, auch sehr niedrige RL- Temperatur des Heizmediums ergeben, was wiederum die benötigte Größe des Energiespeichers, in dem das Heizmedium rückgeleitet wird, reduziert. Vorteilhafterweise liegt die logarithmische Temperaturdifferenz in einem Bereich zwischen 10 und 40K. Ein entsprechender oder ein dazu proportionaler Wert kann beispielsweise als Sollwert in die Regeleinrichtung eingegeben werden.

Vorteilhafterweise können Rücklauftemperaturen << 80 ° C erreicht werden.

Die Vorrichtung umfasst ein Stellglied insbesondere zum Einstellen der logarithmischen Temperaturdifferenz auf einen entsprechenden Sollwert. Insbesondere ist das Stellglied derart ausgebildet, dass es die Vorlauftemperatur des Heizmediums einstellt.

Das Stellglied kann beispielsweise ein Wärmetauscher sein, der das Heizmedium, das der Heizung zugeführt wird, auf eine entsprechende Vorlauftemperatur aufwärmt. Zusätzlich oder alternativ kann auch eine Einrichtung zum Zumischen eines heißeren Mediums (Dampf oder heißes Heizmedium aus dem Energiespeichertank) zu dem Medium derart vorgesehen sein, dass das Heizmedium auf eine bestimmte Vorlauftemperatur gebracht wird.

Schließlich kann gemäß einem besonders bevorzugten Ausführungsbeispiel ein Teil des aus der Heizung rücklaufenden Heizmediums über eine Leitung und über ein Regelventil in einen Energiespeichertank geleitet werden und ein Teil im Kreislauf über eine Zirkulationspumpe in die Heizung rückgeführt werden. Ein dem abgeleiteten Teil mengenmäßig entsprechender Teil an heißerem Heizmedium kann dann dem Heizmedium vor Eintritt in die Heizung zugeführt werden. Das Regelventil wird von der Regeleinrichtung angesteuert, um die Vorlauftemperatur entsprechend einzustellen. Die Zirkulationspumpe ermöglicht einen gleichmäßig hohen Volumenstrom mit entsprechenden Turbulenzen in der Heizfläche und damit auch einen hohen Wärmeübergangskoeffizienten in den Heizflächen.

Die Drehzahl der Zirkulationspumpe kann in Abhängigkeit der Stellung des Regelventils einstellbar sein, wobei die Drehzahl der Zirkulationspumpe insbesondere bei zunehmender Öffnung des Regelventils gegenläufig reduziert wird. Das bedeutet, dass je weiter das Regelventil geöffnet ist (und eine entsprechende Menge an frischem Heizmedium aus dem Energiespeicher dem im Kreislauf K geführten Heizmedium zugeführt wird), desto stärker kann die Drehzahl der Zirkulationspumpe reduziert wird. Somit kann die Strömungsgeschwindigkeit in den Heizflächen immer sehr hoch gehalten werden, derart dass sich eine turbulente Strömung in der Heizung ergibt (mit allen positiven Wärmeübertragungseffekten, wie z.B. hoher Wärmeübergangskoeffizient).

Vorteilhafterweise wird dabei der Volumenstrom des Heizmediums durch die Heizung konstant gehalten.

Vorteilhafterweise ist die Vorrichtung derart ausgebildet, dass sie eine Pumpeinrichtung zum Pumpen des flüssigen Mediums aus dem Behälter in eine Verteilereinrichtung umfasst, wobei die Verteilereinrichtung so ausgebildet ist, dass das flüssige Medium auf eine sich über die Spiegeloberfläche erstreckende Heizfläche der Heizung aufgebracht wird und von dort bis zur Spiegeloberfläche herablaufen kann. Es ist besonders vorteilhaft, wenn die Heizung mindestens einen Ablauf für das Heizmedium im oberen Bereich der Heizung und mindestens einen Ablauf im unteren Bereich der Heizung aufweist und mindestens einen Zulauf für das Heizmedium, der im mittleren Bereich, d.h. zwischen dem oberen und unteren Ablauf, angeordnet ist.

Dies ist insbesondere beim Erwärmen von Maische vorteilhaft.

Gemäß der vorliegenden Erfindung erstreckt sich nun die Heizfläche über die Spiegeloberfläche des flüssigen Mediums bzw. der Maische nach oben, derart, dass das flüssige Medium bzw. die Maische über die Heizfläche bis zur Spiegeloberfläche herablaufen kann. Die volumenunabhängige Heizflächenvergrößerung reduziert somit u.a. auch die Problematik der viskositätsbedingten Erniedrigung des Wärmeübergangs insbesondere bei höher konzentrierten Maischen und während der Verkleisterungsphase.

Dadurch, dass das flüssige Medium in einem dünnen Film über die Heizfläche nach unten fließt, können sich die oberflächennahen Gasblasen aufgrund der Temperaturerhöhung schlagartig bzw. sehr schnell vergrößern und ausgetrieben werden. Durch das Entgasen des flüssigen Mediums können gasbedingte Dichtunterschiede wesentlich reduziert werden und die Enzymaktivität wie oben beschrieben bei Dickmaischen erhöht werden. Dadurch, dass z.B. die Maische über die Heizfläche geleitet wird, können auch weitere unerwünschte flüchtige Substanzen, wie beispielsweise Dimethylsulfid (DMS), zum Teil schon aus der Maische ausgetrieben werden. DMS ist eine schwefelhaltige, organische Verbindung, die einen Fehlgeschmack im Bier verursacht. DMS entsteht aus den beim Mälzen gebildeten Vorläufern S-Methylmethionin (SMM) und Dimethylsulfoxid (DMSO).

Dadurch, dass das flüssige Medium zusätzlich erwärmt wird, indem es über die Heizfläche geleitet wird, kann die Vorlauftemperatur des Heizmediums reduziert werden. Somit ist ein schonenderes Aufheizen der Maische möglich. Dadurch, dass keine hohen Heizmediumvorlauftemperaturen notwendig sind, kann beispielsweise auch Wärmeenergie aus einer Wärmerückgewinnung verwendet werden, d.h. dass Abwärme anderer Prozessschritte (z.B. Warmwasser, das bei der Würzekühlung entsteht) sinnvoll zum Erwärmen des Heizmediums und somit zum Heizen der Maische verwendet werden kann, so dass der Einsatz von Primärenergie zum Aufheizen der Maische verhindert oder zumindest wesentlich reduziert werden kann. Die reduzierte Heizmedientemperatur, sowie der mögliche Einsatz von hochkonzentrierten Maischen bringt somit eine wesentliche Energieeinsparung mit sich. Durch die Verwendung von Heizmedium aus Wärmerückgewinnung kann die Heizflächenwandung kostengünstiger angefertigt werden. Durch z.B. eine dünnere Heizflächenwandung kann wiederum der Wärmedurchgang verbessert werden.

Ein weiterer Vorteil ist, dass sich aufgrund der neuartigen Führung des flüssigen Mediums eine verbesserte Gesamtdurchmischung ergibt, insbesondere auch bei großen Bottichdurchmessern und hohen Füllständen.

Durch die Aufbringung des flüssigen Mediums, z.B. der Maische auf die Heizfläche, die sich oberhalb der Spiegeloberfläche erstreckt, erhöht sich der Volumenstrom an der Maischeoberfläche insbesondere bei hohen Füllständen, was wiederum den manchmal entstehenden, dichtebedingten Maischeteppich an der Spiegeloberfläche reduziert und somit wiederum eine bessere Enzymtätigkeit und Umsetzung der Stärke in der Maische zur Folge hat.

Ein weiterer Vorteil liegt darin, dass z.B. die Maische unabhängig von der Maischemenge von ein und derselben Vorrichtung optimal aufgeheizt werden kann. Man braucht i.d.R. keine spezifischen und biersortenabhängigen Unterteilungen mehr für die Heizzarge, was deutlich Kosten und Klärungsaufwand bei der Konstruktion erspart. Auch "neue" Sorten mit stark variierenden Maischemengen können mit diesem System gut aufgeheizt werden (große Flexibilitätserhöhung für die Brauerei). Selbst "Mikro"-Teilmaischemengen und/oder "Mikro"-Maischemengen können zuverlässig und gleichmäßig aufgeheizt werden. Für solche Fälle wäre dann unter Umständen kein zusätzlicher Heizboden mehr nötig, da die "Mikro"- Teilmaischemengen und/oder "Mikro"-Maischemengen erwärmt werden, indem sie über die Heizfläche herablaufen.

Außerdem ermöglicht diese Verfahrensweise den Bau von schlankeren und günstigeren Gefäßen (mit Füllständen von z.B. 3 bis 5 m und Gefäßhöhen von 5 bis 8 m). Dies wiederum ermöglicht ein sehr gutes FlächenNolumenverhältnis (A/V-Verhältnis) des Bottichs, womit sich die Abstrahlverluste reduzieren.

Die erfindungsgemäße Verteilereinrichtung und Heizfläche kann z.B. auch in bestehende Maischevorrichtung nachgerüstet werden und bringt dem Kunden ein hohes Energiesparpotenzial.

Die Reduzierung der Vorlauftemperatur, d.h. das schonende Aufheizen, verringert Fouling, schont die Enzyme und spart wie zuvor erläutert Energie. Durch die Temperaturabsenkung des Heizmediums kann die Häufigkeit und oder Intensität der CIP-Reinigungen im Maischbottich reduziert werden, was wiederum Wasser, Energie und Reinigungsmittel erspart.

Gemäß der vorliegenden Erfindung wird die Maische in einen oberen Bereich, insbesondere dem oberen Viertel der Maischvorrichtung, auf die Heizfläche aufgebracht. Dies führt zu einer maximalen Vergrößerung der Heizfläche und den damit verbundenen Vorteilen.

Vorteilhafterweise ist die Heizung derart ausgebildet, dass mindestens ein Ablauf für das Heizmedium im oberen Bereich der Heizfläche angeordnet ist und mindestens ein Ablauf im unteren Bereich der Heizfläche vorgesehen ist. Zwischen dem mindestens einen oberen Ablauf und mindestens einem unteren Ablauf ist in einem mittleren Bereich mindestens ein Zulauf für das Heizmedium vorgesehen. Somit kann von dem mittleren Zulauf, das Heizmedium nach oben und unten fließen. Dies bringt den Vorteil mit sich, dass in einem oberen Bereich der Heizung, das Heizmedium im Gegenstrom zur herabfließenden Maische fließt. Auch im unteren Bereich, in dem die Maische sich an der Behälterinnenwand durch die Wirkung des Rührers nach oben bewegt, fließt das Heizmedium im Gegenstrom nach unten, was den Wärmestrom deutlich verbessert.

In jedem Fall verbessert sich der Wärmestrom, wenn die Heizflächen nahezu senkrecht durchströmt werden, dies führt auch zu niedrigeren Rücklauftemperaturen. Im Energiespeicher lagert sich also Wärmeträgermedium weit unter den üblichen 80°C ein und die Größe des Energiespeichertanks und damit auch die Speicherkosten können erheblich reduziert werden.

Um nun z.B. einen Würzekühler mit seinen Auslegungsvolumenströmen und Auslegungstemperaturen zu bedienen, befindet sich am Energiespeicher z.B. ein Mischer, der wärmeres Wärmeträgermedium, z.B. von höheren Schichten in einem Energiespeicher mit dem relativ kälteren Wärmeträgermedium der unteren Schichten eines Energiespeichers in geforderter Weise zusammenmischt.

Die zuvor beschriebene Vorrichtung ist insbesondere zum Erwärmen von Maische geeignet. Die Vorrichtung ist jedoch gleichermaßen ebenfalls zum Erwärmen anderer flüssiger Medien, insbesondere von Würze geeignet.

Fig. 1    zeigt schematisch einen Aufriss einer Vorrichtung gemäß einem ersten Ausführungsbeispiel der vorliegenden Erfindung.

Fig. 2    zeigt schematisch einen Aufriss einer zweiten Ausführungsform gemäß der vorliegenden Erfindung.

Fig. 3    zeigt eine perspektivische Darstellung der Heizfläche der erfindungsgemäßen Vorrichtung.

Fig. 4    zeigt einen Teillängsschnitt durch die erfindungsgemäße Heizung.

Fig. 5    zeigt einen Querschnitt durch die Heizung.

Fig. 6    zeigt einen Regelkreis gemäß der vorliegenden Erfindung.

Fig. 7    zeigt schematisch die erfindungsgemäße Vorrichtung.

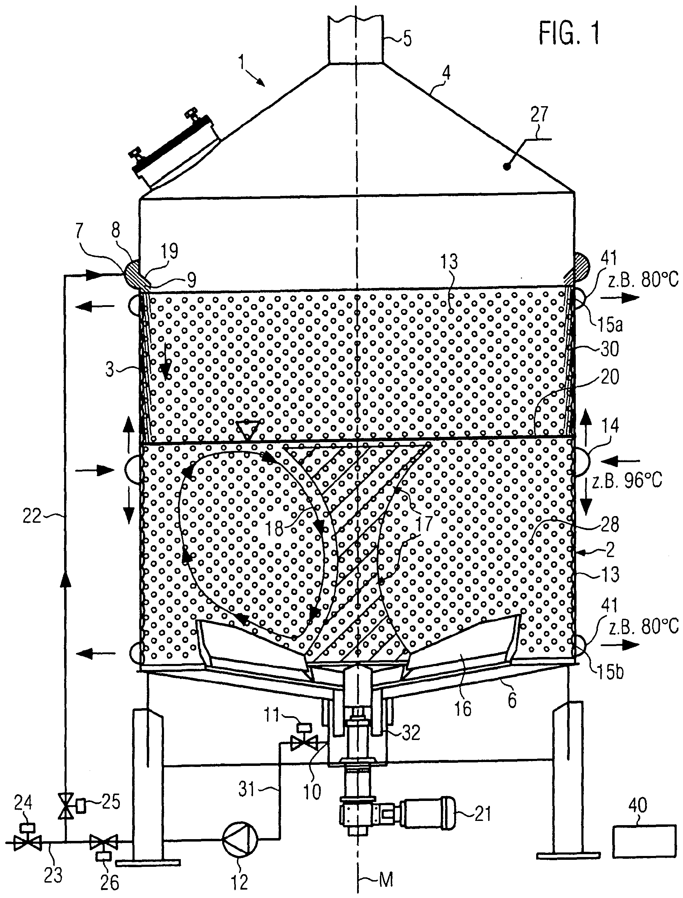

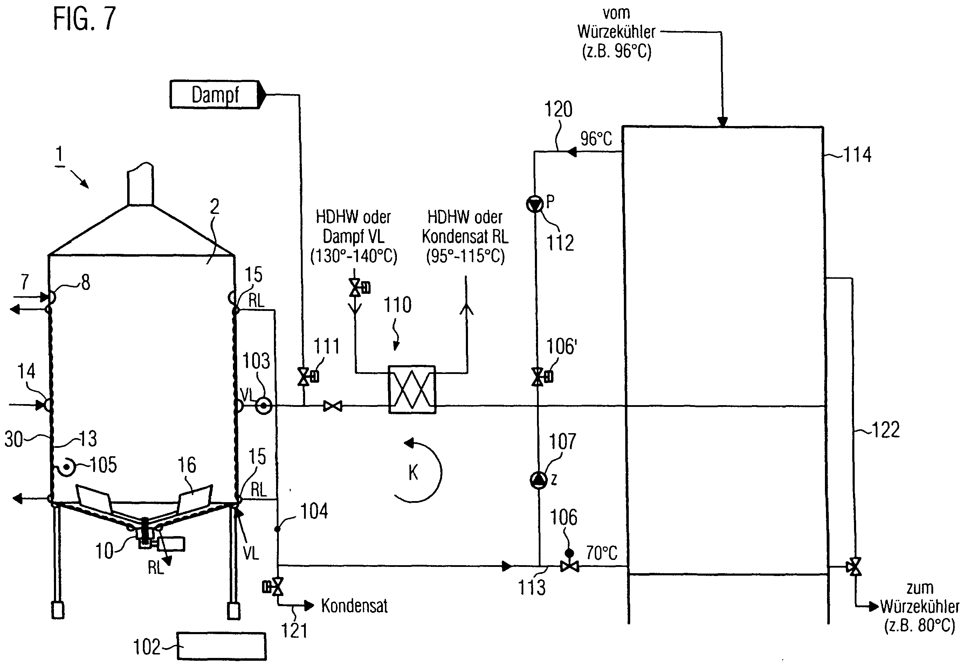

Fig. 7 zeigt den grundsätzlichen Aufbau eines Ausführungsbeispiels gemäß der vorliegenden Erfindung. Die Vorrichtung zum Erwärmen eines flüssigen Mediums, insbesondere einer Maischvorrichtung, wird später im Zusammenhang mit den Fig. 1 bis 5 näher erläutert. Grundsätzlich weist die Vorrichtung jedoch einen Behälter 2 auf und einen Ablauf 10 für das flüssige Medium sowie eine Heizung 30, hier in Form einer Zargenheizung, über deren Heizfläche 13 das flüssige Medium aufgewärmt wird. Die Heizung weist einen oberen und unteren Ablauf 15 (RL) für das Heizmedium auf sowie einen dazwischen angeordneten Zulauf 14. Es kann auch eine entsprechende Bodenheizung vorgesehen sein. Die Heizung funktioniert nach dem Wärmetauscherprinzip. Das flüssige Medium soll mit einer bestimmten Heizrate aufgeheizt werden.

Für die Heizratenregelung ist ein Temperatursensor 105 zum Messen der Temperatur des flüssigen Mediums in dem Behälter 2 vorgesehen. Ferner kann über den Temperatursensor 103 die Vorlauftemperatur des Heizmediums gemessen werden. Hier befindet sich der Temperatursensor 103 in einer Zuleitung für das Heizmedium. Schließlich kann über den Temperatursensor 104 die Rücklauftemperatur des Heizmediums gemessen werden. Hier befindet sich der Temperatursensor 104 in einer Rücklaufleitung 113 des Heizmediums.

Ferner umfasst die Vorrichtung eine Regeleinrichtung 102, über die eine vorbestimmte Heizrate geregelt werden kann.

Bei diesem konkreten Ausführungsbeispiel führt die Rücklaufleitung 113 über ein Regelventil 106, das von der Regeleinrichtung 102 angesteuert wird, in einen Energiespeichertank 114. Das abgekühlte Heizmedium, das eine Rücklauftemperatur von < 80°C, hier z.B. 70°C, aufweist, wird in den unteren Bereich des Energiespeichertanks 114 eingelagert. In einen oberen Bereich des Energiespeichertanks 114 kann ein heißeres Medium, beispielsweise von einem Würzekühler, eingelagert werden. Das abgekühlte Heizmedium kann also während des Prozesses zum Teil in den Energiespeichertank geleitet werden, wobei der Rest im Kreislauf K erneut der Heizung 30 zugeführt werden kann.

Es ist eine Zirkulationspumpe 107 vorgesehen. Die Drehzahl der Zirkulationspumpe 107 kann in Abhängigkeit der Stellung des Regelventils 106 eingestellt werden. Bei zunehmender Öffnung des Regelventils 106 wird die Drehzahl der Zirkulationspumpe 107 entsprechend einem bestimmten Faktor reduziert. Die Menge, die dem im Kreislauf K zirkulierenden Heizmedium über das Regelventil 106 abgeführt wird, kann aus einem oberen Bereich des Energiespeichertanks 114 über die Leitung 120 und eine weitere Pumpe 112 erneut dem Kreislauf K zugeführt werden. Die Pumpe 112 pumpt dabei eine der über das Regelventil 106 abgeführte Menge entsprechende Menge an Heizmedium in den Kreislauf ein. Die entsprechende Menge an Heizmedium kann auch über das Regelventil 106' in der Leitung 120 eingestellt werden. Dann könnte man gegebenenfalls auch auf das Regelventil 106 ganz verzichten. Die Drehzahl der Pumpe 107 würde dann in Abhängigkeit der Öffnung des Regelventils 106' gegenläufig eingestellt.

Die Pumpe 112 wird dabei von der Regeleinrichtung 102 angesteuert. Das Regelventil 106 und die Pumpe 112 werden entsprechend angesteuert, um beispielsweise, wie nachfolgend noch näher erläutert wird, eine bestimmte Vorlauftemperatur des Heizmediums einzustellen. Das Regelventil 106 und die Pumpe 112 wären dann die Stellglieder zum Einstellen einer bestimmten Vorlauftemperatur.

Die Vorlauftemperatur kann zusätzlich oder alternativ auch über die Wärmetauschereinrichtung 110 eingestellt werden. Zusätzlich oder alternativ kann auch über die Einrichtung 111 ein heißeres Medium in Form von z.B. Dampf 111 dem Heizmedium zum Einstellen einer bestimmten Vorlauftemperatur zugeführt werden. Die Vorrichtung kann dann beispielsweise auch eine Einrichtung 121 zum Abführen von Kondensat aufweisen. Um z.B. einen Würzekühler mit seinen Auslegungsvolumenströmen und Auslegungstemperaturen zu bedienen, befindet sich am Energiespeicher 114 z.B. ein Mischer 122, der wärmeres Wärmeträgermedium, z.B. von höheren Schichten, in dem Energiespeicher mit dem relativ kälteren Wärmeträgermedium der unteren Schichten zusammenmischt. Beim Erwärmen des flüssigen Mediums in der Vorrichtung 1 muss die Heizrate auf einen vorbestimmten Wert geregelt werden.

Gemäß einem besonders bevorzugten Ausführungsbeispiel sind die Temperatursensoren 105, 103 und 104 zum Messen der Vorlauftemperatur des Heizmediums, der Rücklauftemperatur des Heizmediums und der Temperatur des flüssigen Mediums vorgesehen. Durch das Messen dieser drei Temperaturen kann die logarithmische Temperaturdifferenz bestimmt werden. Diese dient dann zur Regelung einer bestimmten Heizrate.

Der Wärmestrom und damit die Heizrate ist bei gegebener Fläche und K-Wert direkt von der treibenden Kraft, der Temperaturdifferenz, abhängig.

$$\dot{Q} = k_{Heizfl.} \bullet A_{Heizfl.} \bullet \Delta\vartheta_{\ln}$$

Formel 1

Die logarithmische Temperaturdifferenz ergibt sich wie folgt:

$$\Delta\vartheta_{\ln} = \frac{(\vartheta_{VL} - \vartheta_M) - (\vartheta_{RL} - \vartheta_M)}{\ln\frac{(\vartheta_{VL} - \vartheta_M)}{(\vartheta_{RL} - \vartheta_M)}}$$

Formel 2,

wobei $k_{Heizfl}$= Wärmedurchgangskoeffizient$_{Heizfläche}$ (z.B. 1800 W/(m$^2$K)); $A_{Heizfläche}$ = Fläche 13 der Heizung (z.B. 2 - 100m$^2$); $\Delta\vartheta_{\ln}$ = logarithmische Temperaturdifferenz (z.B. 10-40K); $\dot{Q}$= Wärmestrom, $\vartheta_{VL}$ = Vorlauftemperatur; $\vartheta_{RL}$ = Rücklauftemperatur; $\vartheta_m$ = Temperatur flüssiges Medium (Produkt).

Der obige Wärmestrom entspricht natürlich auch dem Wärmestrom in das Produkt (flüssiges Medium) entsprechend Formel 3

$$\dot{Q}_M = m_M \bullet cp_M \bullet \Delta\vartheta_{Heizrate}$$

Formel 3

wobei $\dot{Q}_M$ = Wärmestrom in das Produkt, $m_M$ = Masse Produkt, $cp_M$ = Wärmekapazität Produkt und $\Delta\vartheta_{Heizrate}$ = Produkttemperaturdifferenz in einem bestimmten Zeitabschnitt.

Aus Formeln 1 bis 3 ergibt sich nachfolgende Formel 4.

$$\Delta\vartheta_{Heizrate} = \frac{A_{Heizfl} \cdot k_{Heizfl}}{cp_M \cdot m_M} \cdot \frac{(\vartheta_{VL} - \vartheta_M) - (\vartheta_{RL} - \vartheta_M)}{\ln\left[\frac{(\vartheta_{VL} - \vartheta_M)}{(\vartheta_{RL} - \vartheta_M)}\right]}$$

Formel 4

Zur Temperaturregelung wird nun vorteilhafterweise die logarithmische Temperaturdifferenz herangezogen. Eine bestimmte logarithmische Temperaturdifferenz entspricht dann einer bestimmten gewünschten Heizrate.

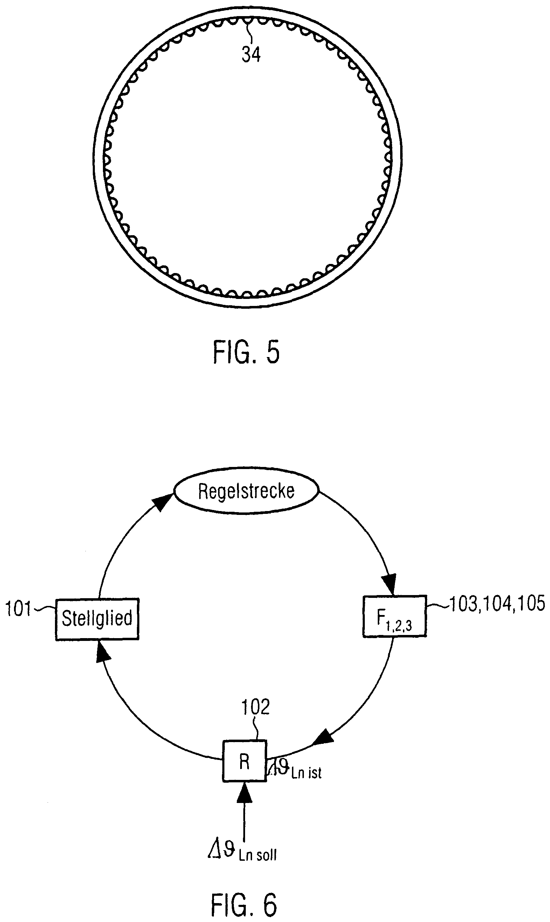

Fig. 6 zeigt beispielsweise einen möglichen Regelkreis zur Heizratenregelung über die logarithmische Temperaturdifferenz. In die Regeleinrichtung 102 wird ein Sollwert $\Delta\vartheta_{ln}$ -soll, der einer bestimmten Heizrate entspricht, eingegeben. Über die Temperatursensoren 103, 104 und 105 können die entsprechenden Vorlauf- und Rücklauftemperaturen des Heizmediums sowie die Temperatur des flüssigen Mediums, d.h. dem Produkt fortlaufend gemessen werden. Aus den Messwerten wird die logarithmische Temperaturdifferenz $\Delta\vartheta_{ln}$ -ist errechnet. Dieser Wert wird mit dem Sollwert $\Delta\vartheta_{ln}$ -soll verglichen. $\Delta\vartheta_{ln}$ -soll kann ein einzelner Wert oder aber ein entsprechender Wertebereich sein. Entspricht $\Delta\vartheta_{ln}$ -ist $\Delta\vartheta_{ln}$ -soll, so ist kein Nachregeln notwendig. Gibt es eine Regelabweichung zwischen $\Delta\vartheta_{ln}$ -ist und $\Delta\vartheta_{ln}$ -soll, so kann über ein Stellglied 101 die logarithmische Temperaturdifferenz auf den Sollwert eingestellt werden. Ein entsprechendes Stellglied kann beispielsweise, wie zuvor beschrieben, ein Wärmetauscher sein, der das Heizmedium auf eine bestimmte Vorlauftemperatur $\vartheta_{VL}$ bringt oder aber Einrichtungen zum Zumischen eines heißeren Mediums zu dem Heizmedium, wie beispielsweise die Dampfzuführung 111 oder aber die Zumischung von frischem, heißem Heizmedium aus dem Energiespeichertank 114, beispielsweise durch das Regelventil 106 und die Pumpe 112 als Stellglied.

Die logarithmische Temperaturdifferenz $\Delta\vartheta_{ln}$ entspricht praktisch der treibenden Kraft für den Wärmestrom. Ein großer Vorteil ist hier, dass schon von der ersten Sekunde an die beteiligten Temperaturen exakt gemessen werden können und die Heizrate bzw. der Wärmestrom, exakt geregelt werden kann. Man erreicht also über den linearen Ansatz $QM = Q = k \cdot A \cdot \Delta\vartheta_{LN}$ eine gleichbleibende Heizrate.

Der zweite, wesentliche große Vorteil ist hierbei, dass die Rücklauftemperatur $\vartheta_{RL}$ immer sehr niedrig und im Wesentlichen um eine gleichbleibende Temperaturdifferenz höher ist als die aktuelle Produkttemperatur $\vartheta_M$. Damit ergibt sich insbesondere zu Beginn der Heizphase eine sehr niedrige Rücklauftemperatur des Heizmediums, die wiederum die benötigte Größe des Energiespeichers reduziert. Die logarithmische Temperaturdifferenz liegt idealerweise in einem Bereich von 10 bis 40K. Dies entspricht beispielsweise einer Heizrate bis 1,5 K/min

Es ist also möglich, in die Regeleinrichtung 102 eine bestimmte Heizrate einzugeben oder aber einen dazu proportionalen Wert, und die Heizratenregelung dann auf der Grundlage der logarithmischen Temperaturdifferenz bzw. einem dazu proportionalen Wert zu regeln. Die Regeleinrichtung 102 kann beispielsweise aus der gewünschten Heizrate bei bekannter Heizfläche $A_{Heizfläche}$ , bekannten k-Wert der Heizfläche $k_{Heizfläche}$ , sowie der bekannten Masse m und der Wärmekapazität $cp_{Produkt}$ den Sollwert für die logarithmische Temperaturdifferenz ermitteln, oder aber ermittelt einen entsprechenden Wert über Versuche (siehe Formel 4).

Bei konstanter Heizrate ist demnach die Temperaturdifferenz zwischen der Vorlauftemperatur des Heizmediums und der jeweiligen aktuellen Temperatur des flüssigen Mediums im wesentlichen konstant.

Zuvor wurde die Regelung der Heizrate über die logarithmische Temperaturdifferenz beschrieben.

Wenn eine nicht so exakte Regelung notwendig ist, kann gemäß einem weiteren Ausführungsbeispiel die Regelung über die Differenz zwischen der mittleren Heizmitteltemperatur, entsprechend dem Mittelwert zwischen Vorlauf- und Rücklauftemperatur des Heizmediums und der jeweils aktuellen Temperatur des flüssigen Mediums während des Erwärmens erfolgen. Die Regelgröße wäre dann in vereinfachter Form ohne Logarithmus

$$\text{Regelgröße} = \frac{\vartheta_{VL} + \vartheta_{RL}}{2} - \vartheta_{\text{Pr}\,odukt}\cdot$$

Ebenfalls geeignet ist ein dazu proportionaler Wert. Dieser erfasste Regelwert wird von der Regeleinrichtung mit einem bestimmten Sollwert verglichen und die Vorlauftemperatur 9VL wird entsprechend eingestellt. Der Regelkreis würde dann dem in Fig. 6 gezeigten Regelkreis entsprechen mit der Ausnahme, dass dann der Ist-Wert der Regelgröße (Temperaturdifferenz zwischen der aktuellen mittleren Heizmitteltemperatur und der jeweils aktuellen Temperatur des flüssigen Mediums mit einem entsprechenden Sollwert oder Sollwertbereich verglichen wird und über ein entsprechendes Stellglied 101, 111, 110, 106, 106', 112 die Vorlauftemperatur 9VL eingestellt wird. Der Sollwert für die Regelgröße kann in diesem Ausführungsbeispiel beispielsweise experimentell entsprechend einer gewünschten Heizrate, oder aber auch rechnerisch bestimmt werden.

Bei den Ausführungsbeispielen kann die Vorlauftemperatur immer um einen im Wesentlichen konstant bleibenden Wert größer sein als die Temperatur des flüssigen Mediums während des Erwärmens. Die Temperaturdifferenz kann dabei in einem Bereich von 10 bis 40K liegen.

Nachfolgend wird die Vorrichtung und das entsprechende Verfahren zum Erwärmen des flüssigen Mediums insbesondere anhand einer Maischevorrichtung näher erläutert.

Fig. 1 zeigt eine Vorrichtung gemäß einer ersten Ausführungsform der vorliegenden Erfindung. Die in Fig. 1 gezeigte Vorrichtung ist geeignet zum Maischen bei der Herstellung von Bier. Die Vorrichtung 1 umfasst einen Behälter 2, dessen Seitenwandung 3 vorzugsweise hohlzylindrisch ausgebildet ist. Der Behälter 2 weist eine Haube oder einen Deckel 4 auf, in dem ein Dunstrohr 5 für flüchtige Bestandteile vorgesehen ist. Auch wenn hier nicht dargestellt, kann der Behälter 2 mit einer Energierückgewinnungseinrichtung verbunden sein. Am unteren Ende umfasst der Behälter einen Boden 6, der sich vorzugsweise konisch nach unten verjüngt. In der Mitte des Bodens ist ein Ablauf 10 hier in Form einer Auslaufschüssel vorgesehen, die mit einer Ablaufleitung 31 verbunden ist. In der Ablaufleitung 31 befindet sich ein Stellventil 11. Ferner ist in der Ablaufleitung eine Pumpe 12 vorgesehen zum Abpumpen der Maische oder eines Teils der Maische. Die Maische kann beispielsweise nach dem Maischvorgang über die Leitung 23 bei geöffneten Ventilen 24 und 26 abgeleitet werden. Bei geschlossenem Ventil 24 und geöffneten Ventilen 25 und 26 kann die Maische, wie auch nachfolgend noch näher erläutert wird, über die Zuführleitung 22 zu einer Verteilereinrichtung 8, die sich sowohl außerhalb, als auch innerhalb des Gefäßes befinden kann, geleitet werden.

Weiter befindet sich im unteren Bereich der Vorrichtung, hier in der Mitte des Bottichbodens, ein Rührwerk. Das Rührwerk umfasst einen Motor 21, eine Antriebswelle, sowie Rührflügel 16. In der Auslaufschüssel können Rührblätter 32 vorgesehen sein.

Weiter umfasst die Vorrichtung auch einen Zulauf 7 für Maische. Das Einlagern der Maische kann über die Leitungen 23 und 22 und die Verteilereinrichtung 8 von oben erfolgen. Es ist jedoch auch möglich, die Maische der Vorrichtung 1 über einen nicht dargestellten Zulauf in einem unteren Bereich, beispielsweise im Boden bzw. in der Auslaufschüssel 10, zuzuführen. In einer besonders günstigen Ausführung sind in der Zuführleitung 22 Dosageeinrichtungen zum Beispiel für Enzyme, Calciumsulfat oder Calciumchlorid vorgesehen, durch diese Art der Dosage kann eine gleichmäßige und homogene Dosierung der Zusätze erreicht werden.

An der Seitenwandung 3 des Behälters 2 ist zumindest über einen Teil der Höhe eine vorzugsweise im Wesentlichen hohlzylindrische Heizung 30 vorgesehen. Bei dieser Ausführungsform ist die Heizung als Wand (Zargenheizung) ausgebildet, durch die ein Heizmedium fließt. Die Heizung kann jedoch auch beabstandet oder anliegend an die Seitenwandung 3 angeordnet sein. Die Heizung kann auch durch mehrere, in Umfangsrichtung nebeneinander angeordnete Teilabschnitte gebildet sein.

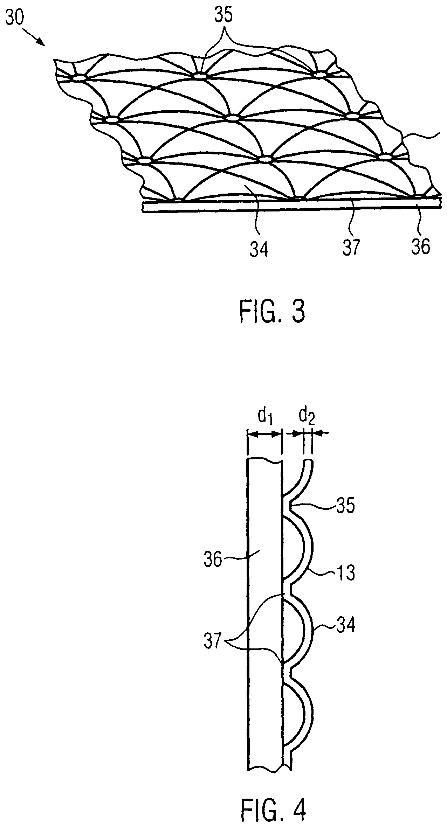

Die Heizung 30 ist vorzugsweise wie in den Fig. 3 bis 5 dargestellt, ausgebildet. Hier ist die Seitenwandung zumindest abschnittsweise doppelwandig ausgebildet und weist eine Außenwandung 36 und eine Innenwand, also Heizfläche 13 auf, wobei die Stärke d1 der Außenwand stärker ist als die Stärke d2 der Innenwand. Die beiden Wandungen sind miteinander an einer Vielzahl von Verbindungsstellen 35 z.B. durch Schweißen verbunden, so dass Unebenheiten zwischen den Verbindungsstellen entstehen. Die Unebenheiten haben beispielsweise die Form einer Vielzahl von nebeneinander und übereinander angeordneten, vorzugsweise aufgeblasenen gewölbten Taschen 34, die miteinander in Verbindung stehen und durch die das Heizmedium fließt. Das heißt, dass sich natürlich auch auf der Produktseite Unebenheiten der Heizfläche, sowohl im Querschnitt als auch im Längsschnitt betrachtet, zwischen den Verbindungsstellen ergeben, wie insbesondere aus Fig. 4 und 5 hervorgeht. Durch die Ausbildung dieser Unebenheiten kann auch ein verbesserter Wärmeübergang auf die Maische erzielt werden wodurch wiederum die Temperatur des Heizmediums erniedrigt werden kann und sich natürlich auch die Rücklauftemperaturen weiter erniedrigen läßt.

Wie aus Fig. 1 hervorgeht, umfasst die Heizung mindestens einen Zulauf 14 für das Heizmedium, der im mittleren Bereich der Heizung 30 (in Richtung der Höhe betrachtet) angeordnet ist. Der Zulauf 14 kann beispielsweise als Ringleitung um den Behälter 2, hier in Form eines Heizrohres, angeordnet sein und kann mehrere über den Umfang verteilte Öffnungen aufweisen, über die das Heizmedium in die Heizung 30, hier die Hohlräume 37 (Fig. 3), geleitet wird.

Darüber hinaus umfasst die Heizung 30 mindestens einen Ablauf 15a für das Heizmedium im oberen Bereich der Heizung 30. Mindestens ein Ablauf bedeutet hier, dass um den Umfang verteilt mindestens eine Öffnung in der Heizung vorgesehen ist, über die das Heizmedium aus den Hohlräumen 37 abgeleitet werden kann. Der mindestens eine Ablauf steht mit einer Leitung 41, hier einer Halbrohrschlange, in Verbindung, die zumindest abschnittsweise um dem Umfang der Seitenwandung 3 des Behälters 2 angeordnet ist. Diese Ringleitung weist darüber hinaus ebenfalls mindestens eine Ableitung 41 für das Heizmedium auf.

Ebenso ist mindestens ein Ablauf 15b im unteren Bereich der Heizung 30 vorgesehen, der, wie im Zusammenhang mit dem mindestens einen oberen Ablauf 15a beschrieben wurde, aufgebaut ist. Das bedeutet, dass das Wärmeträgermedium über den Zulauf 14 in die Heizung einlaufen kann und sich, wie durch die Pfeile dargestellt, bis nach oben und nach unten zu den entsprechenden Abläufen 15a, b fließt.

Die Heizung 30 erstreckt sich bis in einen Bereich, der oberhalb der Spiegelfläche 20 der Maische liegt. Mit der erfindungsgemäßen Vorrichtung können auch sehr kleine Teilmaischemengen ohne Bodenheizung erwärmt werden. Es kann auch eine Bodenheizung vorgesehen sein, die ebenso wie die Zargenheizung, wie in Zusammenhang mit den Fig. 3 und 4 beschrieben wurde, aufgebaut ist. Eine solche Bodenheizung ist jedoch nicht zwingend notwendig.

In einem oberen Bereich der Heizung 30 oder über der Heizung 30 ist eine Verteilereinrichtung 8 vorgesehen, die die Maische oberhalb der Spiegeloberfläche 20 auf die Heizfläche 13 aufbringt, derart, dass die Maische über die Heizfläche 13 bis zur Spiegeloberfläche 20 der Maische herabläuft. Das obere Ende der Heizung bzw. die Verteilereinrichtung 8 sind dabei im Wesentlichen im oberen Viertel des Behälters 2 vorgesehen. Die Verteilereinrichtung kann innerhalb oder außen am Behälter angeordnet sein.

Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab.

Den gleichen Effekt kann man erreichen, indem man das Wärmeträgermedium vor Eintritt in die Heizflächen nachheizt. Dies ist z.B. bei der Produktion von Kochmaischen erforderlich, bei der die nötige treibende Kraft durch rückgewonnene Wärme oft nicht erreicht werden kann.

Bei dem in Fig. 1 gezeigten Ausführungsbeispiel ist die Verteilereinrichtung als ein Halbrohr ausgebildet, das um den äußeren Umfang des Behälters 2 läuft (selbiges kann sich aber auch auf der Innenseite der Behälterwandung befinden). Im Bereich des Halbrohrs sind um den Umfang der Seitenwandung gleichmäßig verteilte Durchbrüche 9 oder aber ein Ringspalt vorgesehen. Am oberen Ende der Öffnung 9 kann eine Umlenkeinrichtung, hier ein Umlenkblech 19 vorgesehen sein, das sich zumindest im Bereich der Öffnungen schräg nach unten erstreckt und die Maische zu der Heizfläche 13 lenkt.

Die im Behälter 2 befindliche Maische 28 kann so im Kreislauf aus dem unteren Bereich über die Pumpe 12 die Leitung 31 und 22 der Verteilereinrichtung 8 zugeführt werden, wobei die Maische dann über die Verteilereinrichtung 8 über die Heizfläche 13 in einem dünnen Strom rückgeführt wird.

Ferner kann die Vorrichtung einen Anschluss für Gas 27 aufweisen, derart, dass die Maischevorrichtung 1 mit Gas beaufschlagt werden kann. Die Vorrichtung kann auch eine nicht gezeigte Einrichtung zum Erzeugen eines Unterdrucks in der Vorrichtung aufweisen. Die Vorrichtung ist dann vorzugsweise als Druckbehälter ausgebildet.

Ferner kann die Vorrichtung auch eine Steuerung 40 aufweisen, die die Zufuhr einer maximalen Maischemenge bis zu einem maximalen Füllstand steuert, wobei sich die Heizfläche 13 über diesen maximalen Füllstand hinaus erstreckt. Weiter kann die Vorrichtung einen nicht dargestellten Füllstandsmesser und auch Temperaturfühler 103, 105, 104 aufweisen. Die Steuerung 40 kann die Stellventile sowie die Pumpe ansteuern und kann auch die Regeleinrichtung 102 umfassen und die Vorlauftemperatur des Heizmediums, wie im Zusammenhang mit Fig. 7 und 6 erläutert vorzugsweise über eine Rücklaufbeimischung regeln. Die Vorlauftemperatur und damit einhergehend die Rücklauftemperatur, sollen so niedrig wie möglich sein um die oben aufgezeigten Vorteile möglichst optimal zu erreichen.

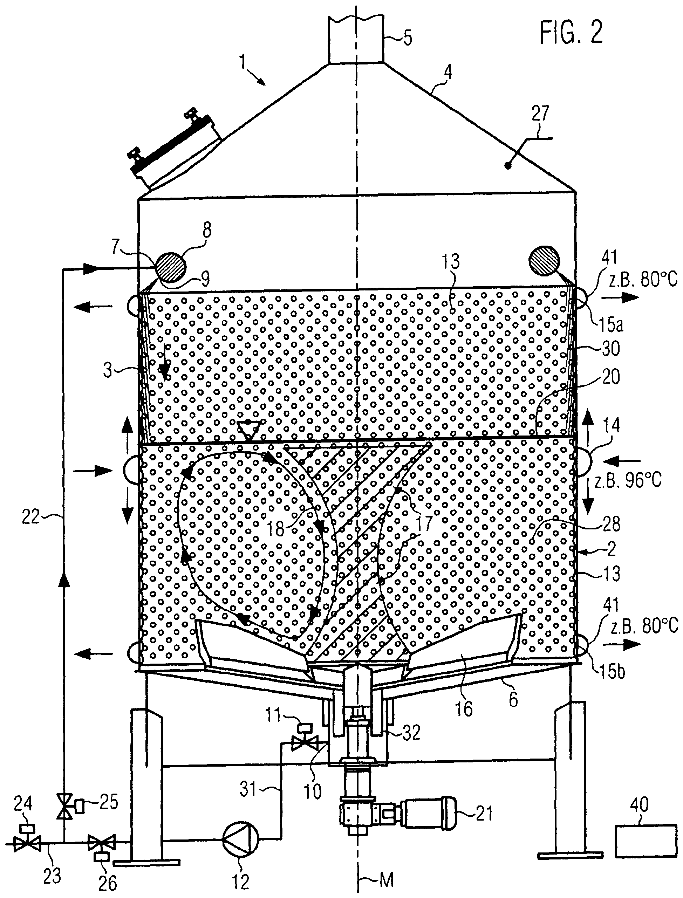

Fig. 2 zeigt eine mögliche zweite Ausführungsform der vorliegenden Erfindung, die der in Fig. 1 gezeigten Ausführungsform entspricht, mit der Ausnahme, dass die Verteilereinrichtung 8 hier nicht als außen an dem Behälter 2 angeordnete Halbrohrschlange ausgebildet ist, sondern als Ringrohr, das im Inneren des Behälters 3 angeordnet ist. Das Ringrohr weist dabei ebenfalls mehrere über den Umfang verteilte Durchbrüche 9 oder aber einen Ringspalt auf, wobei die Durchbrüche und/oder der Ringspalt derart angeordnet sind, dass die Maische auf die Heizfläche 13 aufgebracht wird und an dieser bis zur Spiegeloberfläche 20 herabläuft. Wenn auch nicht dargestellt, kann auch an der Ringleitung eine entsprechende Umlenkeinrichtung vorgesehen sein, die die Maische in Richtung Heizung 13 umlenkt. Die in Fig. 1 und Fig. 2 gezeigten Rohrschlangen bzw. Ringleitungen müssen nicht durchgängig ausgebildet sein sondern können auch aus mehreren Segmenten bestehen, die dann jeweils eine eigene Zuführleitung für Maische aufweisen.

Mit der Möglichkeit ein Produkt (neben Maische z.B. auch CIP-Reinigungsflüssigkeit,) über der Heizfläche herunterlaufen lassen zu können, kann diese Vorrichtung auch als Heizung oder Nachheizung für verschiedene Medien dienen, wobei die Nachheizung von z.B. der Sudhaus-CIP-Reinigungsflüssigkeit einen separaten Wärmetauscher einsparen kann und zusätzlich die rückgewonnene Energie aus dem Prozess verwendet werden kann (was wiederum Primärenergie einspart).

Die Erfindung ermöglicht auch den Bau von schlankeren, höheren und günstigeren Maischegefäßen (mit Füllständen von z.B. 3 bis 5 m und Gefäßhöhen von 5 bis 8 m bei Durchmessern von vorzugsweise 2 - 6 m). Dies wiederum ermöglicht ein sehr gutes A/V-Verhältnis, womit sich die Abstrahlverluste reduzieren.

Nachfolgend wird das erfindungsgemäße Verfahren unter Bezugnahe auf die Fig. 1 näher erläutert.

Bei dem erfindungsgemäßen Verfahren wird zum Maischen zunächst Maische 28 in den Behälter 2 eingeleitet. Das kann beispielsweise zumindest teilweise über den Zulauf 7 und über die Verteilereinrichtung 8 erfolgen. Dabei sind die Ventile 24 und 25 geöffnet und Ventil 26 geschlossen. Das bedeutet, dass bereits beim Einleiten der Maische in den Behälter 2 die Maische als dünner Film, wie durch den Pfeil dargestellt, an der Heizungsoberfläche 13 nach unten läuft und erwärmt wird. Durch die Temperaturerhöhung der Maische vergrößern sich dabei Gasblasen in dem dünnen Film und können ausgetrieben werden. Zusätzlich nimmt die Viskosität an der wärmeren Grenzschicht ab, wodurch sich die Enzyme leichter lösen können und aktiver sind. Der Behälter 2 kann dabei über die Zufuhr 27 mit Gas, z.B. Stickstoff, beaufschlagt worden sein. Die Vorrichtung wird befüllt, bis ein bestimmter Füllstand erreicht ist. Die entsprechende Schaltung der Ventile etc. wird von der Steuereinrichtung 40 gesteuert. Die Heizung 30 wird hier mit einem Heizmedium, z.B. Wasser beheizt, das eine Temperatur nahe Kochtemperatur aufweist, z.B. 96°C aufweist. Wie zuvor beschrieben, verteilt sich das Heizmedium vom Zulauf 14 nach oben und unten in Richtung des mindestens einen Ablaufs 15a, b. Beim Verlassen der Heizung hat das Heizmedium dann beispielsweise eine Temperatur von 80 °C. Vorzugsweise beträgt die Vorlauftemperatur des Heizmediums 10 - 40K mehr als die jeweilige Produkttemperatur der Maische bzw. des zu erwärmenden Mediums. Das heißt, dass mit steigender Produkttemperatur die Heizmediumtemperatur derart geregelt wird, dass die Temperaturdifferenz zwischen Produkt und Heizmedium in einem Bereich von 10 - 40K liegt. Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab. Den gleichen Effekt kann man erreichen, indem man das Wärmeträgermedium vor Eintritt in die Heizflächen nachheizt. Dies ist z.B. bei der Produktion von Kochmaischen erforderlich, bei der die nötige treibende Kraft durch rückgewonnene Wärme eventuell nicht erreicht werden kann.

Aufgrund der vergrößerten Heizfläche, die sich auch oberhalb der Spiegelfläche 20 erstreckt, ist zum Beheizen der Maische kein Heißdampf mit üblichen 140-150°C nötig, so dass ein schonenderes Aufheizen bei geringeren Temperaturen (<140°C) möglich ist, vorzugsweise unterhalb der Kochtemperatur des Heizmediums. Darüber hinaus ist es möglich, dass als Wärmemedium Heißwasser aus der Wärmerückgewinnung verwendet werden kann, d.h. Heizmedium, das durch Abwärme, die beispielsweise beim Würzekühlen anfällt, erwärmt wurde. Natürlich kann das durch die Abwärme erwärmte Heizmedium auch mittels eines Boosters auf höhere Temperaturen angehoben werden, um prozess- oder wochenbedingte Schwankungen auszugleichen.

Dadurch, dass kein Hochdruck-Heißwasser verwendet wird, kann die Wandstärke d2 der Heizfläche 13 schwächer und dünner ausgelegt werden, was wiederum einen verbesserten Wärmeübergang mit sich bringt. Beispielsweise kann die Wandstärke d2 in einem Bereich von 0,4 bis 2mm liegen. Dies wirkt sich auch positiv auf die Schweißarbeiten aus.

Die Maische 28 im Behälter 2 wird während des Maischprozesses zumindest zeitweise abgepumpt und im Kreislauf erneut über die Leitung 31, Pumpe 12 und Leitung 22 der Verteilereinrichtung 8 zugeführt. Über die Verteilereinrichtung 8 wird dann die Maische möglichst gleichmäßig um den Umfang des Behälters 2 verteilt auf die Heizfläche 13 aufgebracht und fließt als dünner Film/Strom in Richtung Spiegeloberfläche 20. Die Dicke des herablaufenden Films der Maische liegt in einem Bereich von vorzugsweise 1 bis 10mm. Die Fördermenge der über die Verteilereinrichtung geführten Maische variiert in gleicher Weise aber in zusätzlicher Abhängigkeit mit dem Bottichdurchmesser.

Die Heizflächenvergrößerung reduziert die Problematik der viskositätsbedingten Erniedrigung des Wärmeübergangs bei höheren Konzentrationen (insbesondere bei Hammermühlenmaischen mit Stärketrägern wie Sorghum oder andere Rohfruchtrohstoffe) oder während der Verkleisterungsphase. Unter besonders günstigen Umständen kann hierdurch der teure Einsatz von technischen Enzymen reduziert werden.

Wie auch im Zusammenhang mit dem Einlagern der Maische beschrieben, können Gaseinschlüsse durch die Temperaturerhöhung beim Herabfließen der Maische ausgetrieben werden. Oberflächennahe Gasblasen können einfach aufreißen. Beim Herablaufen der Maische können auch weitere flüchtige Stoffe wie DMS aus der Maische ausgetrieben werden. Die Maische kann hier besonders gut im Gegenstrom erwärmt werden, da wie durch die Pfeile in Fig. 1 hervorgeht, die Maische über die Heizfläche 13 nach unten fließt, während das Heizmedium, wie ebenfalls durch die Pfeile dargestellt ist, nach oben fließt. Das heißt, dass die Maische in einem Bereich oberhalb der eingelagerten Maische 28 zusätzlich erwärmt werden kann. Im unteren Bereich der Vorrichtung wird die Maische über das Rührwerk 16 gerührt. Aufgrund der zusätzlichen Durchmischung durch die im Kreislauf geführte Maische kann das Rührwerk sehr viel kleiner dimensioniert werden und Scherkräfte können reduziert werden. Durch die Zugabe der Maische von der Verteilereinrichtung 8 aus verbessert sich die Durchmischung der Maische in den obersten Flüssigkeitsschichten relativ unabhängig vom Maischefüllstand. Durch den von den Rührflügeln 16 bedingten Auftrieb, sowie durch den thermischen Auftrieb strebt die Maische an der Seitenwandung 3, wie durch den Pfeil dargestellt ist, nach oben. Maischeteilchen mit niedriger Dichte streben stärker nach oben und schwimmen dort sehr leicht auf. Die meisten Maischeteilchen wandern im oberen Flüssigkeitsbereich in Richtung Zentrum und von da an wieder nach unten, so dass sich der mit 18 bezeichnete Kreislauf ergibt. Die "kältere" Maische befindet sich im Bottichzentrum 17. Die Homogenität der Maischetemperatur wird dadurch verbessert, dass ein Teil der Maische von unten, hier über die Auslaufschüssel 10, aus dem mittleren Bereich abgezogen wird und schließlich wieder auf die temperierte Heizfläche 13 gegeben wird. Dies verbessert die Enzymaktivität wesentlich.

Aufgrund des hohen Volumenstroms in der Auslaufschüssel 10 kann man auf Rührblätter 32 in der Auslaufschüssel verzichten. Im untern Bereich kann die Maische durch die Heizung 30 ebenfalls im Gegenstrom aufgeheizt werden, da hier die Maische an den Seitenwandungen nach oben steigt, wie durch die Pfeile dargestellt ist, während das Heizmedium nach unten fließt. Die Menge der Maische, die im Kreislauf über die Leitung 22 der Verteilereinrichtung 8 aus dem unteren Bereich des Behälters 2 zugeführt wird, kann durch Einstellen der entsprechenden Stellventile sowie der Pumpleistung 12 eingestellt werden.

Am Ende des Maischvorgangs kann dann die Maische über den Ablauf 10 und geöffneten Ventilen 11, 26 sowie 24 über die Pumpe 12 abgepumpt werden. Hier wird die Maische über die Maischepumpe 12 sowohl abgepumpt als auch im Kreislauf gepumpt. Es können jedoch auch zwei unterschiedliche Pumpen vorgesehen sein.

Das zuvor beschriebene Maischverfahren kann wegen der niedrigen Heizmediumtemperaturen auch ohne Einhalten der Rasten mit konstanter Temperatur durchgeführt werden. Die Aufheizrate während dieser Rast liegt dann bei z.B. 0,1K/min.

Die in Fig. 1 und 2 gezeigte Vorrichtung wurde im Zusammenhang mit einem Maischprozess beschrieben. Es ist jedoch ebenfalls möglich, diese Vorrichtung als Vorrichtung zum Erwärmen von anderen Medien , insbesondere Würze zu verwenden. Statt der Maische 28 würde dann z.B. Würze über die Verteilereinrichtung 8 und auf die Spiegeloberfläche der Würze 20 geleitet.

Bei günstigen Oberfächen- zu Volumenverhältnissen kann auch auf eine Heizfläche oberhalb der Spiegeloberfläche verzichtet werden. Auch die Verteilereinrichtung bzw. die Zuführung kann dann in oder unter der Spiegelfläche liegen. Das erfindungsgemäße Regelverfahren ist ganz besonders vorteilhaft in Zusammenhang mit den in Fig. 1 und 2 gezeigten Vorrichtungen ist aber gleichermaßen auch für alle anderen Maischvorrichtungen bzw. Heizapparate geeignet.


**Patentansprüche**

1. Vorrichtung zum Erwärmen eines flüssigen Mediums, insbesondere Maischvorrichtung mit
   einem Behältnis (2),
   einer Heizung (30) zum Beheizen des flüssigen Mediums, insbesondere der Maische (28) mit einem Heizmedium,
   einer Regeleinrichtung (102) zum Regeln einer Heizrate,
   einem Temperatursensor (103) zum Messen der Vorlauftemperatur des Heizmediums, einen Temperatursensor (104) zum Messen der Rücklauftemperatur des Heizmediums einem Temperatursensor (105) zum Messen der Temperatur des flüssigen Mediums, wobei
   die Regeleinrichtung (102) derart ausgebildet ist, dass eine konstante Heizrate entweder über die Regelung der logarithmische Temperaturdifferenz erfolgt, die sich wie folgt ergibt:

$$\Delta\vartheta_{\ln} = \frac{(\vartheta_{VL} - \vartheta_M) - (\vartheta_{RL} - \vartheta_M)}{\ln\dfrac{(\vartheta_{VL} - \vartheta_M)}{(\vartheta_{RL} - \vartheta_M)}}$$

wobei $\Delta\vartheta_{\ln}$ = logarithmische Temperaturdifferenz, $\vartheta_{VL}$ = Vorlauftemperatur; $\vartheta_{RL}$ = Rücklauftemperatur; $\vartheta_M$ = Temperatur flüssiges Medium ist,
oder
zumindest die mittlere Heizmitteltemperatur entsprechend dem Mittelwert zwischen Vorlauf- und Rücklauftemperatur des Heizmediums und die Temperatur des flüssigen Mediums ermittelt wird und die Heizrate über die Differenz zwischen der mittleren Heizmitteltemperatur und der jeweils aktuellen Temperatur des flüssigen Mediums während des Erwärmens geregelt wird.

2. Vorrichtung nach Anspruch 1, **dadurch gekennzeichnet, dass** die Vorrichtung eines oder mehrere der Stellglieder (101, 111, 110, 106; 106') umfasst, insbesondere zum Einstellen der logarithmischen Temperaturdifferenz auf einen Sollwert, wobei das Stellglied (101, 111, 110, 106, 106') insbesondere die Vorlauftemperatur des Heizmediums einstellt und insbesondere einen Wärmetauscher (110) und/oder eine Einrichtung (111, 106; 106') zum Zumischen eines heißen Mediums zu dem Heizmedium umfasst.

3. Vorrichtung nach mindestens einem der Ansprüche 1 bis 2, **dadurch gekennzeichnet, dass** ein Teil des aus der Heizung (30) rücklaufenden Heizmediums über eine Leitung (113) in einen Energiespeichertank (114) rückführt und ein Teil im Kreislauf (k) über eine Zirkulationspumpe (107) in die Heizung (30) rückgeführt wird und die Menge des in den Energiespeichertank (114) geleiteten Teils über ein Regelventil (106, 106') festgelegt wird und insbesondere die Drehzahl der Zirkulationspumpe (107) in Abhängigkeit der Stellung des Regelventils (106, 106') einstellbar ist und insbesondere bei zunehmender Öffnung des Regelventils (106,106') in der Drehzahl reduziert werden kann.

4. Vorrichtung nach mindestens einem der Ansprüche 1 bis 3, **dadurch gekennzeichnet, dass** die Vorrichtung eine Pumpeinrichtung (12) umfasst zum Pumpen des flüssigen Mediums in eine Verteilereinrichtung (8), wobei die Verteilereinrichtung (8) so ausgebildet ist, dass das flüssige Medium auf eine sich über die Spiegeloberfläche (20) erstreckende Heizfläche (13) der Heizung aufgebracht wird und von dort bis zur Spiegeloberfläche herablaufen kann und insbesondere, dass die Heizung (30) mindestens einen Ablauf (15a) für das Heizmedium im oberen Bereich der Heizung, mindestens einen Ablauf (15b) im unteren Bereich der Heizung und mindestens einen Zulauf (14) für das Heizmedium, die im mittleren Bereich der Heizung (30) angeordnet ist, umfasst.

5. Verfahren zum Erwärmen eines flüssigen Mediums, insbesondere von Maische, mit folgenden Schritten:

Einleiten des flüssigen Mediums in eine Vorrichtung, insbesondere Maischvorrichtung und Erwärmen des flüssigen Mediums mit einer nach dem Wärmetauscherprinzip funktionierenden Heizung (30), wobei die Vorlauftemperatur des Heizmediums, die Rücklauftemperatur des Heizmediums und die Temperatur des flüssigen Mediums gemessen werden und die logarithmische Temperaturdifferenz ermittelt wird und die Heizrate über das Regeln der logarithmischen Temperaturdifferenz eingestellt wird die sich wie folgt ergibt:

$$\Delta\vartheta_{\ln} = \frac{(\vartheta_{VL} - \vartheta_M) - (\vartheta_{RL} - \vartheta_M)}{\ln\frac{(\vartheta_{VL} - \vartheta_M)}{(\vartheta_{RL} - \vartheta_M)}}$$

wobei $\Delta\vartheta_{\ln}$ = logarithmische Temperaturdifferenz, $\vartheta_{VL}$ = Vorlauftemperatur; $\vartheta_{RL}$ = Rücklauftemperatur; $\vartheta_M$ = Temperatur flüssiges Medium ist,
oder
zumindest die mittlere Heizmitteltemperatur entsprechend dem Mittelwert zwischen Vorlauf- und Rücklauftemperatur des Heizmediums und die Temperatur des flüssigen Mediums ermittelt wird, und die Heizrate über die Differenz zwischen der mittleren Heizmitteltemperatur und der jeweils aktuellen Temperatur des flüssigen Mediums während des Erwärmens geregelt wird.

6. Verfahren nach Anspruch 5, **dadurch gekennzeichnet, dass** die Vorlauftemperatur des Heizmediums zum Regeln der logarithmischen Temperaturdifferenz oder der Differenz zwischen der mittleren Heizmitteltemperatur und der jeweils aktuellen Temperatur des flüssigen Mediums über ein entsprechendes Stellglied (101) eingestellt wird.

7. Verfahren nach mindestens einem der Ansprüche 5 bis 6, **dadurch gekennzeichnet, dass** der Volumenstrom des Heizmediums in der Heizfläche, insbesondere durch eine Zirkulationspumpe, während des Erwärmens im wesentlichen konstant gehalten wird.

8. Verfahren nach mindestens einem der Ansprüche 5 bis 7, **dadurch gekennzeichnet, dass** der Sollwert für die logarithmische Temperaturdifferenz in einem Bereich von 10 bis 40K liegt.

9. Verfahren nach mindestens einem der Ansprüche 5 bis 8, **dadurch gekennzeichnet, dass** ein Teil des flüssigen Mediums aus der Vorrichtung abgepumpt und zu einer Verteilereinrichtung (8) gepumpt wird, die das flüssige Medium oberhalb der Spiegeloberfläche des flüssigen Mediums auf eine Heizfläche (13a) der Vorrichtung aufbringt, derart, dass das flüssige Medium über die Heizfläche (13a) bis zur Spiegeloberfläche des flüssigen Mediums herabläuft und insbesondere
das Heizmedium in einen oberen und unteren Bereich der Heizung abgeleitet wird und in einen Bereich dazwischen zugeleitet wird.

10. Verfahren nach mindestens einem der Ansprüche 5 bis 9, **dadurch gekennzeichnet, dass** die Rücklauftemperatur < 80 ° C ist.

11. Verfahren nach mindestens einem der Ansprüche 5 bis 10, **dadurch gekennzeichnet, dass** die Temperaturdifferenz zwischen der jeweils aktuellen Vorlauftemperatur des Heizmediums und der jeweils aktuellen Temperatur des flüssigen Mediums im Wesentlichen konstant ist.

12. Verwendung der Vorrichtung und des Verfahrens nach mindestens einem der Ansprüche 1 bis 11 für ein Sudhausgefäß, insbesondere Würzepfanne oder Maischvorrichtung.

**Claims**

1. Device for heating a liquid medium, in particular a mashing device, having
a vessel (2),
a heater (30) for heating the liquid medium, in particular the mash (28), with a heating medium,
a control unit (102) for controlling a heating rate,
a temperature sensor (103) for measuring the flow temperature of the heating medium, a temperature sensor (104) for measuring the return temperature of the heating medium, a temperature sensor (105) for measuring the temperature of the liquid medium, wherein
the control unit (102) is configured such that a constant heating rate takes place either through the control of the logarithmic temperature difference, which is obtained as follows:

$$\Delta \vartheta_{\ln} = \frac{(\vartheta_{VL} - \vartheta_M) - (\vartheta_{RL} - \vartheta_M)}{\ln \dfrac{(\vartheta_{VL} - \vartheta_M)}{(\vartheta_{RL} - \vartheta_M)}}$$

wherein $\Delta\vartheta_{\ln}$ = logarithmic temperature difference, $\vartheta_{VL}$ = flow temperature, $\vartheta_{RL}$ = return temperature, $\vartheta_M$ = temperature liquid medium,
or
at least the mean heating-medium temperature is determined according to the mean value between flow and return temperature of the heating medium and the temperature of the liquid medium, and the heating rate is controlled via the difference between the mean heating-medium temperature and the respective current temperature of the liquid medium during heating.

2. Device according to claim 1, **characterized in that** the device comprises one or a plurality of the control elements (101, 111, 110, 106; 106'), in particular for setting the logarithmic temperature difference to a desired value, wherein the control element (101, 111, 110, 106, 106') particularly sets the flow temperature of the heating medium and particularly comprises a heat exchanger (110) and/or a means (111, 106; 106') for admixing a hot medium to the heating medium.

3. Device according to at least one of claims 1 to 2, **characterized in that** a portion of the heating medium flowing back from the heater (30) is returned via a line (113) into an energy storage tank (114) and a portion is returned in circular flow (k) via a circulation pump (107) into the heater (30), and the amount of the portion passed into the energy storage tank (114) is defined via a control valve (106, 106') and in particular the rotational speed of the circulation pump (107) is adjustable in response to the position of the control valve (106, 106') and can be reduced in speed in particular with an increasing opening of the control valve (106, 106').

4. Device according to at least one of claims 1 to 3, **characterized in that** the device comprises a pump unit (12) for pumping the liquid medium into a distributor device (8), wherein the distributor device (8) is configured such that the liquid medium is applied onto a heating surface (13) of the heater extending over the surface level (20) and can run down from there until reaching the surface level and in particular that the heater (30) comprises at least one outlet (15a) for the heating medium in the upper area of the heater, at least one outlet (15b) in the lower area of the heater and at least one inlet (14) for the heating medium, said inlet being arranged in the middle area of the heater (30).

**5.** Method for heating a liquid medium, in particular mash, comprising the following steps:

introducing the liquid medium into a device, in particular a mashing device, and heating the liquid medium with a heater (30) operating according to the heat exchanger principle, wherein the flow temperature of the heating medium, the return temperature of the heating medium and the temperature of the liquid medium are measured and the logarithmic temperature difference is determined and the heating rate is set by controlling the logarithmic temperature difference, which is obtained as follows:

$$\Delta \vartheta_{\text{ln}} = \frac{(\vartheta_{VL} - \vartheta_M) - (\vartheta_{RL} - \vartheta_M)}{\ln \dfrac{(\vartheta_{VL} - \vartheta_M)}{(\vartheta_{RL} - \vartheta_M)}}$$

wherein $\Delta \vartheta_{\text{ln}}$ = logarithmic temperature difference, $\vartheta_{VL}$ = flow temperature, $\vartheta_{RL}$ = return temperature, $\vartheta_M$ = temperature liquid medium,
or
at least the mean heating-medium temperature is determined according to the mean value between flow and return temperature of the heating medium and the temperature of the liquid medium, and the heating rate is controlled through the difference between the mean heating-medium temperature and the respective current temperature of the liquid medium during heating.

**6.** Method according to claim 5, **characterized in that** the flow temperature of the heating medium is set for controlling the logarithmic temperature difference or the difference between the mean heating-medium temperature and the respective current temperature of the liquid medium via a corresponding control element (101).

**7.** Method according to at least one of claims 5 to 6, **characterized in that** the volume flow of the heating medium in the heating surface is kept substantially constant during heating, in particular by a circulation pump.

**8.** Method according to at least one of claims 5 to 7, **characterized in that** the desired value for the logarithmic temperature difference is in a range of 10 to 40K.

**9.** Method according to at least one of claims 5 to 8, **characterized in that** a part of the liquid medium is pumped off from the device and is pumped to a distributor device (8) which applies the liquid medium above the surface level of the liquid medium to a heating surface (13a) of the device in such a manner that the liquid medium runs down along the heating surface (13a) until reaching the surface level of the liquid medium and in particular
the heating medium is discharged into an upper and lower area of the heater and is supplied into an area thereinbetween.

**10.** Method according to at least one of claims 5 to 9, **characterized in that** the return temperature is <80°C.

**11.** Method according to at least one of claims 5 to 10, **characterized in that** the temperature difference between the respective current flow temperature of the heating medium and the respective current temperature of the liquid medium is substantially constant.

**12.** Use of the device and of the method according to at least one of claims 1 to 11 for a brewhouse vessel, in particular a wort kettle or a mashing device.

**Revendications**

**1.** Dispositif destiné au réchauffement d'un milieu liquide, en particulier d'un dispositif de préparation de moût comprenant :

- un réservoir (2) ;
- un moyen de chauffage (30), lequel est destiné au chauffage du milieu liquide, en particulier du moût (28), et lequel comprend un milieu de chauffage ;
- un mécanisme de régulation (102), lequel est destiné à la régulation d'une vitesse de chauffage ;

- une sonde de température (103) destinée à la mesure de la température du flux du milieu de chauffage, une sonde de température (104) destinée à la mesure de la température du reflux du milieu de chauffage, une sonde de température (105) destinée à la mesure de la température du milieu liquide ; dans lequel le mécanisme de régulation (102) est conçu de telle sorte qu'une vitesse de chauffage constante est atteinte,

soit par la régulation de la différence de température logarithmique, laquelle est obtenue comme suit :

$$\Delta \vartheta_{\ln} = \frac{(\vartheta_{VL} - \vartheta_M) - (\vartheta_{RL} - \vartheta_M)}{\ln \frac{(\vartheta_{VL} - \vartheta_M)}{(\vartheta_{RL} - \vartheta_M)}}$$

où

$\Delta\vartheta_{\ln}$ = différence de température logarithmique ;
$\vartheta_{VL}$ = température du flux ;
$\vartheta_{RL}$ = température du reflux ;
$\vartheta_M$ = température du milieu liquide,

soit tout au moins la température moyenne du fluide caloporteur est déterminée conformément à la valeur moyenne qui existe entre la température du flux et la température du reflux du milieu de chauffage, d'une part, et la température du milieu liquide, d'autre part, et la vitesse de chauffage est régulée par la différence entre la température moyenne du fluide caloporteur et la température respectivement actuelle du milieu liquide pendant la phase de réchauffement.

2. Dispositif selon la revendication 1, **caractérisé en ce que** le dispositif comprend un ou plusieurs des moyens de réglage (101, 111, 110, 106 ; 106'), en particulier en vue de l'ajustement de la différence de température logarithmique à une valeur nominale, dans lequel le moyen de réglage (101, 111, 110, 106; 106') permet en particulier de régler la température du flux du milieu de chauffage et comprend en particulier un échangeur de chaleur (110) et/ou un mécanisme (111, 106 ; 106') en vue de l'addition par mélange d'un milieu chaud au milieu de chauffage.

3. Dispositif selon au moins l'une des revendications 1 à 2, **caractérisé en ce qu'**une partie du milieu de chauffage qui reflue en dehors du moyen de chauffage (30) retourne dans un réservoir de stockage énergétique (114) par l'intermédiaire d'une conduite (113) et une partie se trouvant dans le circuit (k) est renvoyée dans le moyen de chauffage (30) par l'intermédiaire d'une pompe de circulation (107) et la quantité de la partie dirigée dans le réservoir de stockage énergétique (114) est déterminée par une soupape de régulation (106, 106') et, en particulier, la vitesse de rotation de la pompe de circulation (107) peut être réglée en fonction de la position de la soupape de régulation (106, 106') et la vitesse de rotation peut, en particulier, être réduite en agrandissant l'ouverture de la soupape de régulation (106,106').

4. Dispositif selon au moins l'une des revendications 1 à 3, **caractérisé en ce que** le dispositif comprend un mécanisme de pompe (12) en vue du pompage du milieu liquide dans un mécanisme de distribution (8), dans lequel le mécanisme de distribution (8) est conçu de telle sorte que le milieu liquide est amené sur une surface de chauffe (13) du moyen de chauffage, laquelle s'étend à travers la surface miroir (20), et peut de là s'écouler jusqu'à la surface miroir et en particulier, **en ce que** le moyen de chauffage (30) comprend au moins une évacuation (15a) pour le milieu de chauffage dans la zone supérieure du chauffage, au moins une évacuation (15b) dans la zone inférieure du chauffage et au moins une arrivée (14) pour le milieu de chauffage, laquelle est disposée dans la zone médiane du moyen de chauffage (30).

5. Procédé destiné au réchauffement d'un milieu liquide, en particulier de moût, lequel comprend les phases suivantes :

- l'introduction du milieu liquide dans un dispositif, en particulier dans un dispositif de préparation de moût ; et
- le réchauffement du milieu liquide au moyen d'un moyen de chauffage (30) qui fonctionne selon le principe de l'échangeur de chaleur ;

dans lequel la température du flux du milieu de chauffage, la température du reflux du milieu de chauffage et la température du milieu liquide sont mesurées ;

et

dans lequel la différence de température logarithmique est déterminée et la vitesse de chauffage est ajustée par la régulation de la différence de température logarithmique, laquelle est obtenue comme suit :

$$\Delta\vartheta_{\ln} = \frac{(\vartheta_{VL} - \vartheta_M) - (\vartheta_{RL} - \vartheta_M)}{\ln\dfrac{(\vartheta_{VL} - \vartheta_M)}{(\vartheta_{RL} - \vartheta_M)}}$$

dans lequel

$\Delta\vartheta_{\ln}$ = différence de température logarithmique ;
$\vartheta_{VL}$ = température du flux ;
$\vartheta_{RL}$ = température du reflux ;
$\vartheta_M$ = température du milieu liquide,

soit

tout au moins la température moyenne du fluide caloporteur est déterminée conformément à la valeur moyenne existant entre la température du flux et la température du reflux du milieu de chauffage, d'une part, et la température du milieu liquide, d'autre part, et la vitesse de chauffage est régulée par la différence entre la température moyenne du fluide caloporteur et la température respectivement actuelle du milieu liquide pendant la phase de réchauffement.

6. Procédé selon la revendication 5, **caractérisé en ce que** la température du flux du milieu de chauffage est ajustée par l'intermédiaire d'un moyen de réglage (101) correspondant, en vue de la régulation de la différence de température logarithmique ou de la différence entre la température moyenne du fluide caloporteur et la température respectivement actuelle du milieu liquide.

7. Procédé selon au moins l'une des revendications 5 à 6, **caractérisé en ce que** le débit volumique du milieu de chauffage est maintenu, pour l'essentiel, constant dans la surface de chauffe pendant la phase de réchauffement, en particulier par l'intermédiaire d'une pompe de circulation.

8. Procédé selon au moins l'une des revendications 5 à 7, **caractérisé en ce que** la valeur nominale pour la différence de température logarithmique se situe dans une plage comprise entre 10 et 40K.

9. Procédé selon au moins l'une des revendications 5 à 8, **caractérisé en ce qu'**une partie du milieu liquide est pompée hors du dispositif et acheminée vers un mécanisme de distribution (8), lequel amène le milieu liquide au-dessus de la surface miroir du milieu liquide, sur une surface de chauffe (13a) du dispositif, de telle sorte que le milieu liquide s'écoule vers la surface miroir du milieu liquide par l'intermédiaire de la surface de chauffe (13a) et, en particulier, le milieu de chauffage est évacué dans une zone supérieure et inférieure du moyen de chauffage et acheminé dans une zone qui se trouve entre ces deux zones.

10. Procédé selon au moins l'une des revendications 5 à 9, **caractérisé en ce que** la température du reflux est < 80 °C.

11. Procédé selon au moins l'une des revendications 5 à 10, **caractérisé en ce que** la différence de température entre la température respectivement actuelle du flux du milieu de chauffage et la température respectivement actuelle du milieu liquide est, pour l'essentiel, constante.

12. Utilisation du dispositif et du procédé selon au moins l'une des revendications 1 à 11 pour une cuve de brassage, en particulier pour une bassine à moût ou un dispositif de préparation de moût.

FIG. 1

z.B. 80°C

z.B. 96°C

z.B. 80°C

FIG. 2

z.B. 80°C

z.B. 96°C

z.B. 80°C

M

FIG. 3

FIG. 4

FIG. 5

FIG. 6

FIG. 7

vom
Würzekühler
(z.B. 96°C)

zum
Würzekühler
(z.B. 80°C)

HDHW oder Kondensat RL
(95°–115°C)

HDHW oder Dampf VL
(130°–140°C)

Kondensat

Dampf

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009005211 U1

- DE 2535120 A1